# EUROPÄISCHE PATENTANMELDUNG

(11) **EP 1 488 997 A1**
(43) Veröffentlichungstag der Anmeldung: **22.12.2004**
(21) Anmeldenummer: 04013708.5
(22) Anmeldetag: 09.06.2004
(51) Int. Cl.: B64C 1/14, E05F 15/12

(54) **Mechanismus zum Öffnen bzw. Schliessen einer Passagiertür eines Flugzeuges**

(30) Priorität: 18.06.2003 DE 10327404
(71) Anmelder: Airbus Deutschland GmbH, 21129 Hamburg (DE)
(72) Erfinder: Lehmbecker, Tobias, 21640 Nottensdorf (DE); Paul, Carsten, 21441 Garstedt (DE)
(74) Vertreter: Klöpper, Ute, Dipl.-Ing.

(57) **Zusammenfassung**

Mechanismus zum Öffnen bzw. Schließen einer Passagiertür eines Flugzeuges, wobei bei einem Öffnungsvorgang die Passagiertür um ihre Türunterkante nach innen gekippt, anschließend nach oben verfahren und abschließend im geöffneten Zustand positioniert wird.

Ein derartiger Mechanismus, der ohne einen störungsanfälligen Hebelmechanismus auskommt, ist dadurch gekennzeichnet, dass an den beiden Rahmenspanten der Passagiertür jeweils eine Zahnstange (15) montiert ist, die den Verfahrweg der Passagiertür vorgeben. In den Zahnkranz einer jeden Zahnstange greifen die Steuerritzel (12,13) einer Getriebeeinheit (4) ein, von denen ein Steuerritzel (12) für den Öffnungsvorgang und das andere Steuerritzel (13) für den Schließvorgang der Passagiertür abwechselnd mit dem zugeordneten Zahnkranz zusammenwirken. Die Getriebeeinheit (4) ist auf der, ein Antriebsritzel (3) tragenden Welle des Motors (1) drehbar gelagert, wobei die Steuerritzel (12,13) der Getriebeeinheit über angesteuerte Ritzel (9,10) mit dem Antriebsritzel (3) des Motors (1) zusammenwirken.

## Beschreibung

Die Erfindung betrifft einen Mechanismus zum Öffnen bzw. Schließen einer Passagiertür eines Flugzeuges, wobei bei einem Öffnungsvorgang die Passagiertür um ihre Türunterkante nach innen gekippt, anschließend nach oben verfahren und abschließend im geöffneten Zustand positioniert wird, vorzugsweise in einem Raum zwischen Flugzeugstruktur und Flugzeuginnenverkleidung, und wobei für einen Schließvorgang diese Bewegungsabläufe in umgekehrter Reihenfolge ablaufen, unter Verwendung mindestens einer an der Passagiertür befestigten Zahnstange, in deren Zahnkranz mindestens ein, von einem Motor angetriebenes Ritzel eingreift.

Bisher sind zwei Prinzipien, die den Bewegungsablauf zum Öffnen und Schließen von Flugeug-Passagiertüren beschreiben, zur Anwendung gekommen. Bei dem ersten Prinzip ist ein Verfahrweg der Passagiertür nach innen und oben vorgesehen, wobei die Passagiertür zunächst um ihre Türunterkante nach innen gekippt und anschließend nach oben gefahren wird. Abschließend erfolgt eine Positionierung der Passagiertür im geöffneten Zustand, vorzugsweise in einem Raum zwischen Flugzeugstruktur und Flugzeuginnenverkleidung. Das Verschließen der Passagiertür erfolgt in entsprechend umgekehrter Reihenfolge der obigen Bewegungsabläufe. Zur Durchführung dieses Prinzip sind folgende drei Umsetzungsmöglichkeiten bekannt:
- Beim Anlauf dient ein zentral angeordneter Motor zum Verdrehen eines Hebelmechanismuses, damit die Passagiertür um die Türunterkante nach innen gekippt werden kann. Dadurch kommt eine Zahnstange, die an der Passagiertür befestigt ist, auf Ritzeln zum liegen, welche die Passagiertür nach oben befördern. Die Führung der Passagiertür wird von Gleitfüßen unterstützt, die in eine entsprechende Nut in der Zahnstange eingreifen. Nachteiligerweise können die Gleitfüße, vor allem im Notfall, verkannten und somit den Bewegungsablauf behindern. Ein Totalausfall der Passagiertür bei einem Motordefekt kann nur durch die Verwendung mehrerer Motoren verhindert werden.
- Der Bewegungsablauf wird von einem Seilzug gesteuert, wobei Gleitfüße bzw. Gleitrollen die Führung der Passagiertür unterstützen. Neben der vorgehend erwähnten Problematik der Gleitfüße bedarf das Seil einer guten Wartung, um ein Reißen des Seiles zu vermeiden. Auch hier würde ein Motordefekt den Totalausfall der Passagiertür bedeuten.
- Um eine Passagiertür nach oben zu verfahren, besteht entlang der oberen Flugzeugrumpfkontur eine Verbindung zu einem Dehnband. Dieses läuft parallel mit und unter dem Fußboden des Flugzeuges entlang. Es weist eine vorgegebene Vorspannung auf, welche bewirkt, dass die Passagiertür mittels des Dehnbandes nach oben gezogen und dort auch fixiert wird. Nachteilig ist, dass das Dehnband oft erneuert werden muss, damit ein zügiges und schnelles Öffnen der Passagiertür erfolgen kann.

Bei dem zweiten möglichen Prinzip wird die Passagiertür nach außen geöffnet, wobei die Tür gegen den Druckunterschied, d.h. dem Unterschied zwischen Kabinen- und Atmosphärendruck, gesichert werden muss. Dieses erfolgt durch sogenannte Türstopper. Für einen Öffnungsvorgang der Passagiertür wird zunächst eine Verriegelung, die im Notfall, die zugehörige Notrutsche auslöst, an der Unterseite der Tür entsichert. Um die Passagiertür an den Türstoppern zu entriegeln, wird die Tür angehoben, damit die Tür über die Türstopper nach außen verfahren werden kann. Die Führung der Passagiertür wird von einem Tragarm übernommen und von einer Parallel-Lenker-Konstruktion an der Türoberseite unterstützt. Beim Aufschwenken der Passagiertür nach außen bleibt ihre Außenseite immer nach außen gerichtet, wobei der gesamte Bewegungsablauf mittels einer Vielzahl von Stellmotoren automatisiert worden ist. Nachteilig ist, dass der Tragarm das Gesamtgewicht der Passagiertür erhöht und dass der Parallel-Lenker eine relativ komplizierte Konstruktion darstellt, die eine Problem- bzw. Störungsquelle sein kann. Auch muss - aufgrund der Öffnung der Tür nach außen - die anzuschließende Peripherie entsprechend konstruiert sein, beispielsweise die obere Plattform bei mobilen Passagiertreppen. Diese Plattform muss entsprechende Abmessungen haben, damit die Tür im Notfall auch manuell geöffnet werden kann. Weiterhin muss der gesamte Bewegungsablauf auf die möglichen Witterungsverhältnisse ausgelegt sein; so muss die Konstruktion der Windstärke 10 standhalten und die Türverkleidung Schnee und Regen ausgesetzt werden können.

Der Erfindung liegt nun die Aufgabe zugrunde, einen Mechanismus der eingangs genannten Art zu schaffen, der ohne einen störungsanfälligen Hebelmechanismus auskommt.

Die Aufgabe wird erfindungsgemäß dadurch gelöst, dass an den beiden Rahmenspanten der Passagiertür jeweils eine Zahnstange montiert ist, die den Verfahrweg der Passagiertür vorgeben, dass in den Zahnkranz einer jeden Zahnstange die Steuerritzel einer Getriebeeinheit eingreifen, dass das Steuerritzel für den Öffnungsvorgang und das andere Steuerritzel für den Schließvorgang der Passagiertür mit dem zugeordneten Zahnkranz zusammenwirken, dass die Getriebeeinheit auf der, ein Antriebsritzel tragenden Welle des Motors drehbar gelagert ist, und das die Steuerritzel der Getriebeeinheit über angesteuerte Ritzel mit dem Antriebsritzel des Motors zusammenwirken.

Ausgestaltungen der Erfindung sind in den Unteransprüchen 2 bis 8 beschrieben.

Vorteile der Erfindung sind gegenüber der eingangs beschriebenen Parallel-Lenker-Konstruktion in einer Gewichtseinsparung durch den Wegfall einer Vielzahl von Stellmotoren einerseits und durch eine Reduktion der statischen Anforderungen an die Türkonstruktion, die nicht den Witterungsverhältnissen auf dem Vorfeld eines Flugplatzes ausgesetzt ist, zu sehen. Gegenüber einer Passagiertür mit einem Verfahrweg nach innen und oben weist die Erfindung den Vorteil auf, dass die bisher verwendete Strukturkonstruktion im Bereich oberhalb der Tür weitestgehend übernommen werden kann. Die vorhandene Anschlussperipherie muss nicht ausgetauscht oder aufgestockt werden. Vorteilhafterweise kommt bei der unkomplizierten Konstruktion bewährte Technik zum Einsatz, wobei vorzunehmende Wartungsarbeiten auf die jeweiligen Untersuchungen ausgelegt werden können.

In der Zeichnung ist ein Ausführungsbeispiel nach der Erfindung dargestellt, und zwar zeigt:
- Fig. 1:: einen elektrischen Motor mit einem auf seiner Welle angeordneten Mechanismus zum Öffnen bzw. Schließen einer Passagiertür eines Flugzeuges, und
- Fig. 2:: eine Passagiertür mit vier Einzelmotoren, wobei ein Einzelmotor mit seinem Mechanismus in vergrößerten Abmessungen abgebildet ist.

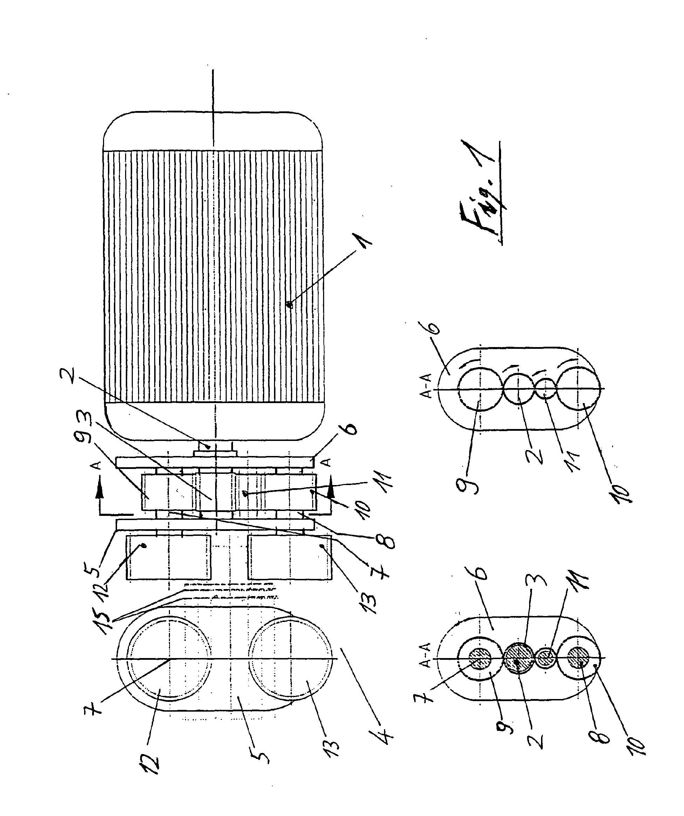

In Fig. 1 ist ein Elektromotor 1 eines Mechanismus zum Öffnen bzw. Schließen einer Passagiertür eines Flugzeuges dargestellt, dessen Welle 2 mit einem Antriebsritzel 3 mechanisch fest verbunden ist, beispielsweise durch eine Nut/Feder-Verbindung. Auf der Welle 2 ist weiterhin eine Getriebeeinheit 4 angeordnet, die zwei, in einem vorgegebenen Abstand zueinander auf der Welle 2 drehbar angeordnete Trägerplatten 5 und 6 aufweist. Beide Trägerplatten 5 bzw. 6, die das Antriebsritzel 3 einschließen, sind jeweils über zwei drehbar gelagerte Hauptwellen 7 und 8 miteinander verbunden. Auf diesen Hauptwellen 7 und 8 sind zwischen den Trägerplatten 5 und 6 jeweils ein steuerndes Ritzel 9 bzw. 10 mechanisch befestigt, wobei das steuernde Ritzel 9 direkt mit dem Antriebsritzel 3 und das andere steuernde Ritzel 10 über ein, zwischen den Trägerplatten 5 und 6 drehbar gelagertes Umkehrritzel 11 mit dem Antriebsritzel 3 zusammenwirkt. Die Hauptwellen 7 und 8 ragen auf der dem Motor 1 abgewandten Seite über die mit 5 bezeichnete Trägerplatte derart hinaus, dass auf dem überstehenden Wellende jeweils ein Steuerritzel 12 bzw. 13 mechanisch befestigt ist. Die Steuerritzel 12 und 13 greifen in die Zähne einer Zahnstange 15 ein, die an einem von zwei Rahmenspanten einer Passagiertür 14 befestigt und vorzugsweise als geschwungene Zahnstange ausgebildet ist. Hierbei ist vorgesehen, dass ein Steuerritzel für den Öffnungsvorgang und das andere Steuerritzel für den Schließvorgang der Passagiertür 14 mit der Zahnstange zusammenwirkt. Im vorliegenden Beispiel dient das Steuerritzel 9, welches über das angesteuerte Ritzel 7 direkt mit dem Antriebsritzel 3 zusammenwirkt, für den Öffnungsvorgang der Passagiertür, während das Steuerritzel 10, welches über das steuernde Ritzel 10 und das Umkehrritzel 11 mit dem Antriebsritzel 3 in Verbindung steht, für den Schließvorgang der Passagiertür herangezogen wird. Hierfür stehen die jeweils verwendeten Steuerritzel mit dem Zahnkranz der zugeordneten Zahnstange 15 im Eingriff. Grundsätzlich ist auch eine Anordnung des Umkehrritzels 11 zwischen dem Antriebsritzel 3 und dem angesteuerten Ritzel 9 für den Öffnungsvorgang der Passagiertür 14 denkbar.

In Fig. 1 sind zusätzlich drei Seitenansichten dargestellt, und zwar zwei Seitenansichten gemäß der Schnittlinie A-A und eine normale Seitenansicht. Aus diesen Seitenansichten sind die Abmessungen der Trägerplatten 5 und 6 im Verhältnis zu den Ritzeln 3 und 9 bis 13 sowie die Drehrichtungen dieser Ritzel ersichtlich. Für die Lagerung der Hauptwellen 7 und 8 bzw. des Umkehrritzels 11 können Gleit- oder Wälzlager zur Anwendung kommen. Weiterhin ist vorgesehen - aber zeichnerisch nicht dargestellt - dass im Notfall die Passagiertür 14 über einen Kurbelantrieb von Hand geöffnet wird.

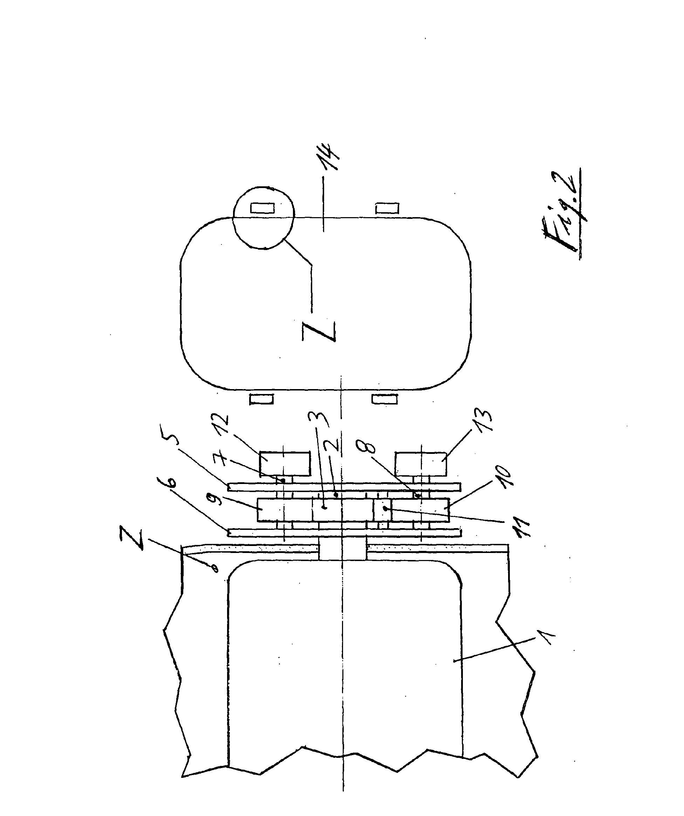

Wie bereits erwähnt ist der Verfahrweg der Passagiertür 14 nach innen und oben. Hierzu wird die Tür um ihre Unterkante nach innen gekippt, anschließend nach oben verfahren und abschließend vorzugsweise in einem Raum zwischen Flugzeugstruktur und Flugzeuginnenverkleidung positioniert. Der Verfahrweg der Passagiertür an den sogenannten Türrahmenspanten ist durch die montierten Zahnstangen gegeben, wobei innerhalb der Passagiertür vier Motoren angeordnet sind, deren Lage zu der Passagiertür 14 aus Fig. 2 ersichtlich ist. Diese Figur zeigt eine Draufsicht auf die Passagiertür 14 mit den vier Mechanismen Z für ein Öffnen bzw. Schließen der Tür 14. Die Mechanismen Z, die in Fig. 2 im Detail vergrößert dargestellt sind, weisen die aus Fig. 1 ersichtlichen Bauteile auf, die mit den bisher verwendeten Bezugszeichen versehen sind. Jeweils zwei Mechanismen Z wirken jeweils mit einer von zwei in Fig. 2 zeichnerisch nicht dargestellten Zahnstangen derart zusammen, dass deren Steuerritzel 12 bzw. 13 entweder für einen Öffnungs- oder für einen Schließvorgang in die Zahnkränze der Zahnstangen eingreifen. Zusammenfassend ist festzustellen, dass je Motor eine um die zugehörige Motorwelle 2 flexibel gelagerte Getriebeeinheit 4 vorhanden ist, wobei jede Getriebeeinheit 4 beidseitig in die zugeordnete Zahnstange eingreift. Vorteilhafterweise sind durch die flexible Lagerung beliebige Verfahrwege möglich. Die Passagiertür 14 verharrt durch Selbsthemmung und durch ihre Schwerkraft in der eingenommenen Endposition.

### Bezugszeichenliste

- Z: Mechanismus

- 1: Motor
- 2: Welle des Motors 1
- 3: Antriebsritzel des Motors 1
- 4: Getriebeeinheit
- 5: Trägerplatte der Getriebeeinheit 4
- 6: Trägerplatte der Getriebeeinheit 4
- 7: Hauptwelle der Getriebeeinheit 4
- 8: Hauptwelle der Getriebeeinheit 4
- 9: ansteuerndes Ritzel
- 10: ansteuerndes Ritzel
- 11: Umkehrritzel
- 12: Steuerritzel
- 13: Steuerritzel
- 14: Passagiertür
- 15: Zahnstange der Passagiertür 14

## Patentansprüche

1. Mechanismus zum Öffnen bzw. Schließen einer Passagiertür eines Flugzeuges, wobei bei einem Öffnungsvorgang die Passagiertür um ihre Türunterkante nach innen gekippt, anschließend nach oben verfahren und abschließend im geöffneten Zustand positioniert wird, vorzugsweise in einem Raum zwischen Flugzeugstruktur und Flugzeuginnenverkleidung, und wobei für einen Schließvorgang diese Bewegungsäbläufe in umgekehrter Reihenfolge ablaufen, unter Verwendung mindestens einer an der Passagiertür befestigten Zahnstange, in deren Zahnkranz mindestens ein, von einem Motor angetriebenes Ritzel eingreift, **dadurch gekennzeichnet, dass** an den beiden Rahmenspanten der Passagiertür (14) jeweils eine Zahnstange (15) montiert ist, die den Verfahrweg der Passagiertür (14) vorgeben, dass in den Zahnkranz einer jeden Zahnstange (15) die Steuerritzel (12, 13) einer Getriebeeinheit (4) eingreifen, dass das Steuerritzel (12) für den Öffnungsvorgang und das andere Steuerritzel (13) für den Schließvorgang der Passagiertür (14) mit dem zugeordneten Zahnkranz zusammenwirken, dass die Getriebeeinheit (4) auf der, ein Antriebsritzel (3) tragenden Welle (2) des Motors (1) drehbar gelagert ist, und dass die Steuerritzel (12 bzw. 13) der Getriebeeinheit (4) über angesteuerte Ritzel (9 bzw. 10) mit dem Antriebsritzel (3) des Motors (1) zusammenwirken.

2. Mechanismus nach Anspruch 1, **dadurch gekennzeichnet, dass** die Getriebeeinheit (4) zwei, in einem vorgegebenen Abstand zueinander auf der Welle (2) des Motors (1) drehbar angeordnete Trägerplatten (5 bzw. 6) aufweist, dass beide Trägerplatten (5 bzw. 6) jeweils mit zwei drehbar gelagerten Hauptwellen (7, 8) verbunden sind, die jeweils mit einem außerhalb der Trägerplatten (5, 6) angeordneten Steuerritzel (12 bzw. 13) für den Öffnungsvorgang bzw. den Schließvorgang der Passagiertür (14) und jeweils mit einem, zwischen den Trägerplatten (5, 6) befindlichen angesteuerten Ritzel (9, 10) mechanisch fest verbunden sind, und dass das angesteuerte Ritzel (9) für den Öffnungsvorgang der Passagiertür (14) direkt mit dem Antriebsritzel (3) und das andere angesteuerte Ritzel (10) für den Schließvorgang der Passagiertür (14) über ein, zwischen den Trägerplatten (5, 6) drehbar gelagertes Umkehrritzel (11) mit dem Antriebsritzel (3) des Motors (1) zusammenwirkt.

3. Mechanismus nach Anspruch 1 oder 2, **gekennzeichnet durch** eine Anordnung des Umkehrritzels (11) zwischen dem Antriebsritzel (3) und dem angesteuerten Ritzel (9) für den Öffnungsvorgang.

4. Mechanismus nach Anspruch 1, 2 oder 3, **gekennzeichnet durch** die Verwendung von Gleitlagern für die Lagerung der Hauptwellen (7, 8) bzw. des Umkehrritzels (11).

5. Mechanismus nach Anspruch 1, 2 oder 3, **gekennzeichnet durch** die Verwendung von Wälzlagern für die Lagerung der Hauptwellen (7, 8) bzw. des Umkehrritzels (11).

6. Mechanismus nach Anspruch 1, 2, 3, 4 oder 5, **dadurch gekennzeichnet, dass** im Notfall die Passagiertür (14) über einen Kurbelantrieb von Hand geöffnet wird.

7. Mechanismus nach Anspruch 1, 2, 3, 4, 6 oder 7, **dadurch gekennzeichnet, dass** die Passagiertür (14) durch Selbsthemmung und durch ihre Schwerkraft in der eingenommenen Endposition verharrt.

8. Mechanismus nach einem der Ansprüche 1 bis 7, **gekennzeichnet durch** die Verwendung von insgesamt vier Motoren (1) mit jeweils zugehöriger Getriebeeinheit (4), von denen jeweils zwei mit einer der beiden Zahnstangen (15) zusammenwirken.
